# EUROPÄISCHE PATENTSCHRIFT

(11) **EP 3 686 055 B1**
(45) Veröffentlichungstag und Bekanntmachung des Hinweises auf die Patenterteilung: **29.11.2023**
(21) Anmeldenummer: 20152657.1
(22) Anmeldetag: 20.01.2020
(51) Int. Cl.: B60P 7/08, B60P 1/64

(54) **SYSTEM ZUM AUFNEHMEN, WECHSELN UND LAGERN VON SICHERUNGSEINHEITEN ZUM SICHERN VON AUF EINEM TRANSPORTANHÄNGER GELAGERTEN GEGENSTÄNDEN SOWIE TRANSPORTANHÄNGER ZUM TRANSPORTIEREN VON DERARTIGEN GEGENSTÄNDEN**
SYSTEM FOR RECEIVING, CHANGING AND STORING SECURING UNITS FOR SECURING OBJECTS STORED ON A TRANSPORT TRAILER AND TRANSPORT TRAILER FOR TRANSPORTING SUCH OBJECTS
SYSTÈME DE RÉCEPTION, DE REMPLACEMENT ET DE STOCKAGE DES UNITÉS DE SÉCURITÉ DESTINÉES À FIXER DES OBJETS STOCKÉS SUR UNE REMORQUE DE TRANSPORT AINSI QUE REMORQUES DE TRANSPORT PERMETTANT DE TRANSPORTER DE TELS OBJETS

(30) Priorität: 24.01.2019 DE 202019100403 U
(43) Veröffentlichungstag der Anmeldung: 29.07.2020
(73) Patentinhaber: Oehler Maschinen Fahrzeugbau GmbH, 77652 Offenburg (DE)
(72) Erfinder: Oehler, Manfred, 77652 Offenburg (DE)
(74) Vertreter: Westphal, Mussgnug & Partner Patentanwälte mbB

(56) Entgegenhaltungen:
- EP-A1- 2 767 434
- EP-B1- 2 141 979
- CN-A- 106 494 298
- DE-U1-202012 104 379
- US-B1- 9 227 675

## Beschreibung

Die Erfindung betrifft ein System zum Aufnehmen, Wechseln und Lagern von Sicherungseinheiten zum Sichern von auf einem Transportanhänger gelagerten Gegenständen. Darüber hinaus betrifft die Erfindung einen Transportanhänger zum Transportieren von Gegenständen, die mit einer derartigen Sicherheitseinheit gesichert werden können.

In land- oder forstwirtschaftlichen Anwendungen werden Transportanhänger für ganz unterschiedliche Anwendungen verwendet. Der Transport von land- oder forstwirtschaftlichen Stückgütern, beispielsweise Stroh- oder Heuballen, stellt dabei eine hervorzuheben Anwendung dar. Im Bestreben, beispielsweise die Ernte von Getreide oder das Mähen von Wiesen so effektiv wie möglich zu machen, ist es von Vorteil, wenn die Stroh- oder Heuballen mit möglichst wenig Fahrten transportiert werden können. Entsprechend nehmen die Länge und die Ladekapazität der hierfür verwendeten Transportanhänger immer weiter zu, so dass die Länge der hierfür verwendeten Transportanhänger eine Länge von 10 m häufig überschreitet.

Um die Ladekapazität weiter zu erhöhen, ohne die Länge der Transportanhänger zu vergrößern, ist man bestrebt, so viele Stroh- oder Heuballen auf den verwendeten Transportanhängern übereinander zu stapeln. Mit zunehmender Anzahl der übereinandergestapelten Heu- oder Strohballen nimmt jedoch deren Stabilität ab, so dass die Gefahr ansteigt, dass die Stroh- oder Heuballen während des Transports vom Transportanhänger fallen.

Hierdurch kann eine erhebliche Gefahr für den Straßenverkehr ausgeben.

In der EP 2 141 979 B1 ist ein Transportanhänger gezeigt, der eine Sicherungseinheit aufweist, mit welcher die Heu- oder Strohballen gesichert werden können. Die Sicherungseinheit umfasst hierzu eine erste Sicherungswand und eine zweite Sicherungswand, welche an den jeweiligen seitlichen Enden des Transportanhängers angeordnet sind, im Wesentlichen parallel zueinander verlaufen und einen Art Bordwand darstellen. Die Sicherungswände sind mit einer Bewegungseinrichtung zwischen einer bodennahen Beladungsstellung, in welcher der Transportanhänger beladen werden kann, und einer Schließstellung verstellbar, in welcher die erste Sicherungswand und die zweite Sicherungswand die land- oder forstwirtschaftlichen Stückgütern, welche mit dem Transportanhänger transportiert werden sollen, in vergleichsweise großem Abstand zum Boden sichern. Die Bewegungseinrichtung ist derart ausgestaltet, dass die beiden Sicherungswände nach Art einer Parallelogrammführung geführt werden, so dass diese nicht um sich selbst gedreht werden, sondern auch beim Bewegen im Wesentlichen parallel zueinander verlaufen. In der Schließstellung klemmen die Sicherungswände die land- oder forstwirtschaftlichen Stückgüter zusammen, so dass sie auch in vergleichsweise großer Höhe gesichert werden. Mittels einer derartigen Sicherungseinheit lässt sich die Ladekapazität eines Transportanhängers deutlich steigern, ohne Abstriche bei der Betriebssicherheit machen zu müssen.

Wie erwähnt, dient der in der EP 2 141 979 B1 gezeigte Transportanhänger nahezu ausschließlich dazu, Heu- oder Strohballen zu transportieren. Folglich wird dieser hauptsächlich in der Erntezeit eingesetzt, die üblicherweise eine Zeitdauer von vier bis sechs Wochen nicht überschreitet. In der übrigen Zeit des Jahres besteht kaum die Möglichkeit, den dort gezeigten Transportanhänger einsetzen zu können. Da ein derartiger Transportanhänger eine Länge von 10 m und mehr aufweisen kann, muss zudem der entsprechende Platz in einer Lagerhalle vorgehalten werden, der zum Abstellen von anderen land- oder forstwirtschaftlichen Maschinen oder dergleichen nicht verwendet werden kann. Insofern ist es schwierig, einen derartigen Transportanhänger wirtschaftlich zu betreiben.

In der EP 2 767 434 A1 und in der DE 20 2012 104 379 U1 ist ein Transportanhänger offenbart, der einer Ladefläche und eine Sicherungseinheit zum Sichern der auf der Ladefläche aufgenommenen Gegenstände aufweist, wobei die Sicherungseinheit lösbar mit dem Transportanhänger verbindbar ist.

Aufgabe einer Ausführungsform der vorliegenden Erfindung ist es daher, ein System zum Aufnehmen, Wechseln und Lagern von Sicherungseinheiten zum Sichern von auf einem Transportanhänger gelagerten Gegenständen vorzuschlagen, mit welchem es mit einfachen und kostengünstigen Mitteln möglich ist, einen Transportanhänger im Vergleich zu bekannten Transportanhängern wirtschaftlicher zu betreiben, ohne Abstriche bei der Betriebssicherheit machen zu müssen. Des Weiteren liegt einer Ausgestaltung der vorliegenden Erfindung die Aufgabe zugrunde, einen Transportanhänger als solchen zum Transportieren von derartigen Gegenständen zu schaffen, der im Vergleich zu bekannten Transportanhängern wirtschaftlicher betrieben werden kann

Eine Ausführungsform der Erfindung betrifft ein System zum Aufnehmen, Wechseln und Lagern von Sicherungseinheiten zum Sichern von auf einem Transportanhänger gelagerten Gegenständen wie Fahrzeugen oder land- oder forstwirtschaftlichen Stückgütern, umfassend
- einen Transportanhänger zum Transportieren von Gegenständen wie Fahrzeugen oder land- oder forstwirtschaftlichen Stückgütern, mit
   o einer Ladefläche zum Aufnehmen der Gegenstände,
   o zumindest einer Sicherungseinheit zum Sichern der auf der Ladefläche aufgenommenen Gegenstände, und
   o zumindest einem Befestigungsabschnitt, mit welchem die Sicherungseinheit lösbar mit dem Transportanhänger verbindbar ist, und
- eine Aufnahmeeinrichtung zum Aufnehmen, Wechseln und Lagern der zumindest einen vom Transportanhänger gelösten Sicherungseinheit.

Ein wesentlicher Aspekt des vorschlagsgemäßen Systems ist, die Sicherungseinheit, mit welcher insbesondere land- oder forstwirtschaftliches Stückgut wie Heu- oder Strohballen gesichert werden können, lösbar mit dem Transportanhänger verbindbar auszugestalten. Hierdurch lässt sich der Transportanhänger nicht nur zum Transportieren von Heu- oder Strohballen oder dergleichen verwenden, sondern auch zum Transportieren von anderen land- oder forstwirtschaftlichen Stückgütern, beispielsweise von Holzstämmen, wozu am Befestigungsabschnitt hierauf angepasste Sicherungseinheiten wie Bohrungen oder dergleichen angebracht werden können. Zudem kann der Transportanhänger auch zum Transport von Fahrzeugen oder Maschinen verwendet werden, die beispielsweise mit Sicherungsseilen am Transportanhänger gesichert werden. Auf die Sicherungsseile können mittels des Befestigungsabschnitts am Transportanhänger lösbar befestigt werden. Der Befestigungsabschnitt kann daher universell verwendet werden. Der vorschlagsgemäße Transportanhänger kann über das gesamte Jahr zu verschiedenen Zwecken verwendet und folglich deutlich wirtschaftlicher im Vergleich zum in der EP 2 141 979 B1 beschriebenen Transportanhänger betrieben werden.

Zudem umfasst das System eine Aufnahmeeinrichtung, mit welcher die vom Transportanhänger gelöste Sicherungseinheit gelagert werden kann. Das vorschlagsgemäße System ermöglicht daher die einfache und sichere Lagerung der Sicherungseinheit für den Fall, dass sie nicht benötigt wird.

Erfindungsgemäß umfasst das System zumindest eine Bewegungseinrichtung zum Bewegen der Sicherungseinheit zwischen dem Transportanhänger und der Aufnahmeeinrichtung. Wie eingangs erwähnt, kann die Sicherungseinheit Sicherungswände umfassen, mit welcher das landwirtschaftliche Stückgut gesichert wird. Wie ebenfalls erwähnt, kann der Transportanhänger eine Länge von über 10 m aufweisen. Folglich weisen auch die Sicherungswände eine entsprechende Länge und ein entsprechendes Gewicht auf, so dass das händische Bewegen der Sicherungswände zwischen dem Transportanhänger und der Aufnahmeeinrichtung kaum möglich ist. Die Bewegungseinrichtung unterstützt einen Benutzer dabei, die Sicherungswände oder andere Komponenten der Sicherungseinheit zwischen dem Transportanhänger und der Aufnahmeeinrichtung sicher zu bewegen. Die Bewegungseinrichtung kann dabei ähnlich wie die das Führungsgestänge eines Schwingtors einer Garage aufgebaut und mit Federn vorgespannt sein, so dass ein einziger Benutzer die entsprechenden Komponenten der Sicherungseinheit zwischen dem Transportanhänger und dem Aufnahmeeinrichtung auf sichere Weise und ohne einen übermäßigen Kraftaufwand bewegen kann.

Erfindungsgemäß weist die Bewegungseinrichtung eine Antriebseinrichtung auf oder wirkt mit einer Antriebseinrichtung zusammen. Wie erwähnt, können die Sicherungswände des Transportanhängers eine Länge von 10 m und mehr mit einem entsprechenden Gewicht aufweisen. Um eine möglichst komfortable und je nach Ausführung auch fernsteuerbare Bewegung der Sicherungswände zwischen dem Transportanhänger und dem Aufnahmeabschnitt zu ermöglichen, kann eine Antriebseinheit eingesetzt werden. Zum Bewegen der Sicherungswände zwischen dem Transportanhänger und dem Aufnahmeabschnitt ist daher kein Kraftaufwand für den Benutzer erforderlich. Die Antriebseinrichtung kann aber auch für anders ausgestaltete Sicherungseinheiten verwendet werden.

Nach Maßgabe einer weiteren Ausführungsform umfasst die Aufnahmeeinrichtung einen ersten Aufnahmeabschnitt und einen zweiten Aufnahmeabschnitt, die derart angeordnet sind, dass der Transportanhänger zwischen dem ersten Aufnahmeabschnitt und dem zweiten Aufnahmeabschnitt positionierbar ist. In dieser Ausführungsform kann der Transportanhänger insbesondere längsseits zwischen den ersten und den zweiten Aufnahmeabschnitt gefahren werden, wodurch die entsprechenden Komponenten der Sicherungseinheit vom Transportanhänger gelöst und auf dem jeweils benachbart angeordneten Aufnahmeabschnitt abgelegt oder in diesen eingebracht werden können. Der Weg, über welchen die Komponenten der Sicherungseinheit bewegt werden müssen, wird in dieser Ausführungsform minimiert. Die Zeit, die zum Befestigen und Lösen der Sicherungseinheit am bzw. vom Transportanhänger benötigt wird, wird ebenfalls minimiert. Zudem wird die Gefahr der Beschädigung der betreffenden Komponenten der Sicherungseinheit beim Bewegen zwischen dem Transportanhänger und dem Aufnahmeabschnitt reduziert.

Bei einer weitergebildeten Ausführungsform kann die Bewegungseinrichtung an der Sicherungseinheit angeordnet sein. Der in der EP 2 141 979 B1 beschriebene Transportanhänger weist bereits eine Bewegungseinrichtung auf, mit welcher die Sicherungswände zwischen der Beladungsstellung und der Schließstellung bewegt werden können. Wenn die Sicherungseinheit derartige Bewegungseinrichtungen bereits umfasst, kann das System so ausgestaltet werden, dass diese zum Bewegen der entsprechenden Komponenten der Sicherungseinheit zwischen dem Transportanhänger und dem Aufnahmeabschnitt verwendet werden können. Es ist folglich nicht notwendig, zusätzliche Bewegungseinrichtungen vorzusehen, so dass die Kosten zum Bereitstellen des vorschlagsgemäßen Systems gering gehalten werden können und sich im Wesentlichen auf das Vorsehen eines geeigneten Befestigungsabschnitts beschränken, der das schnelle und einfache Lösen und Befestigen der Sicherungseinheit am bzw. vom Transportanhänger ermöglicht.

Eine weitergebildete Ausführungsform zeichnet sich dadurch aus, dass die Sicherungseinheit eine erste Sicherungswand und eine zweite Sicherungswand umfasst, die mit der Bewegungseinrichtung in eine Lagerstellung bewegbar sind, in welcher die erste Sicherungswand auf dem ersten Aufnahmeabschnitt und die zweite Sicherungswand auf dem zweiten Aufnahmeabschnitt derart aufliegen, dass die Sicherungseinheit vom Transportanhänger lösbar ist. Die Verwendung von Sicherungswänden hat sich als besonders vorteilhaft zum Sichern von land- oder forstwirtschaftlichen Stückgütern wie Heu- oder Strohballen herausgestellt. Insofern lässt sich der Transportanhänger in dieser Ausführungsform besonders einfach und kostengünstig bereitstellen. Die Bewegungseinrichtung kann ebenfalls dazu verwendet werden, die Sicherungseinheit in der Lagerstellung zu halten, wenn sie vom Transportwagen gelöst ist. Sobald die Sicherungseinheit wieder benötigt wird, kann der Transportanhänger wieder unter die Sicherungseinheit gefahren und mit dieser verbunden werden.

Eine weitere Ausführungsform zeichnet sich dadurch aus, dass die erste Sicherungswand und die zweite Sicherungswand zwischen einer bodennahen Beladungsstellung, in welcher der Transportanhänger beladen werden kann, und einer Schließstellung mittels der Bewegungseinrichtung verschwenkbar sind, in welcher die erste Sicherungswand und die zweite Sicherungswand die auf der Ladefläche aufgenommenen Gegenstände sichern. Die Möglichkeit, die Sicherungswände zwischen einer bodennahen Beladungsstellung und einer Schließstellung verschwenken zu können, gewährleistet einerseits die gute Zugänglichkeit zur Ladefläche beim Be- und Entladen des Transportanhängers und andererseits die Sicherung der land- oder forstwirtschaftlichen Stückgütern in einem vergleichsweise großen Abstand vom Boden, so dass der Transportanhänger auch hoch aufgetürmte Stückgüter sicher transportieren und damit effektiv genutzt werden kann.

Nach Maßgabe einer weiteren Ausführungsform umfasst die Sicherungseinheit Rungen, Streben, Bordwände oder dergleichen, welche lösbar am zumindest einen Befestigungsabschnitt befestigbar sind. Mit Rungen oder Streben können beispielsweise Baumstämme auf dem Transportanhänger gesichert werden. Mit Bordwänden lassen sich kugelförmige und/oder rieselfähige Stückgüter wie Getreide oder Mais transportieren. Da sich diese auch an den bereits vorhandenen Befestigungsabschnitten befestigen lassen, sind keine weiteren Maßnahmen notwendig, um die Rungen, Streben oder Bordwände mit dem Transportanhänger verwenden zu können. Folglich kann der Transportanhänger auch für den Transport von sich deutlich von Heu- oder Strohballen unterscheidenden land- oder forstwirtschaftlichen Stückgütern ohne nennenswerten konstruktiven Mehraufwand verwendet werden.

In einer weitergebildeten Ausführungsform kann zumindest eine Laderampe zum Beladen der Ladefläche am zumindest einen Befestigungsabschnitt lösbar befestigbar sein. Die Laderampe ist insbesondere dann von Nutzen, wenn Fahrzeuge, Maschinen oder dergleichen mit dem Transportanhänger transportiert werden sollen. Auch hier gilt, dass die Laderampe ebenfalls am bereits ohnehin vorhandenen Befestigungsabschnitt befestigt werden kann, so dass keine zusätzlichen Maßnahmen notwendig sind, um die Laderampe mit dem Transportanhänger zu verwenden.

Bei einer weitergebildeten Ausführungsform kann zumindest eine Abstützeinheit zum Abstützen des Transportanhängers beim Be- und Entladen am zumindest einen Befestigungsabschnitt lösbar befestigbar sein. Insbesondere beim Be- und Entladen des Transportanhängers mittels einer Laderampe kann es notwendig sein, den Transportanhänger abzustützen, um ein unkontrolliertes Kippen zu vermeiden. Auch zum Befestigen der Abstützeinheit kann der Befestigungsabschnitt verwendet werden, so dass auch hier keine weiteren konstruktiven Maßnahmen notwendig sind.

Eine Ausbildung der Erfindung betrifft einen Transportanhänger zum Transportieren von Gegenständen wie Fahrzeugen oder land- oder forstwirtschaftlichen Stückgütern, umfassend
- eine Ladefläche zum Aufnehmen der Gegenstände,
- zumindest eine Sicherungseinheit zum Sichern der auf der Ladefläche aufgenommenen Gegenstände, wobei die Sicherungseinheit eine erste Sicherungswand und eine zweite Sicherungswand aufweist, die
   o zwischen einer bodennahen Beladungsstellung, in welcher der Transportanhänger beladen werden kann, und
   o einer Schließstellung verschwenkbar sind, in welcher die erste Sicherungswand und die zweite Sicherungswand die auf der Ladefläche aufgenommenen Gegenstände sichern,
- eine Bewegungseinrichtung mit einer Antriebseinheit zum Verschwenken der ersten Sicherungswand und der zweiten Sicherungswand, und
- zumindest einen Befestigungsabschnitt, mit welchem die Sicherungseinheit lösbar mit dem Transportanhänger verbindbar ist, wobei
- die erste Sicherungswand und die zweite Sicherungswand mit der Bewegungseinrichtung in eine Lagerstellung bewegbar sind, in welcher die erste Sicherungswand und die zweite Sicherungswand derart auf dem Boden aufliegen, dass die Sicherungseinheit vom Transportanhänger lösbar ist.

Die technischen Effekte und Vorteile, die sich mit dem vorschlagsgemäßen Transportanhänger erreichen lassen, entsprechen denjenigen, die für die betreffenden Ausführungsformen des Systems zum Aufnehmen, Wechseln und Lagern von Sicherungseinheiten erörtert worden sind. Zusammenfassend sei darauf hingewiesen, dass sich die Verwendung von Sicherungswänden als besonders vorteilhaft zum Sichern von land- oder forstwirtschaftlichen Stückgütern wie Heu- oder Strohballen herausgestellt hat. Insofern lässt sich der Transportanhänger besonders einfach und kostengünstig bereitstellen. Die Möglichkeit, die Sicherungswände zwischen einer bodennahen Beladungsstellung und einer Schließstellung verschwenken zu können, gewährleistet einerseits die gute Zugänglichkeit zur Ladefläche beim Be- und Entladen des Transportanhängers und andererseits die Sicherung der land- oder forstwirtschaftlichen Stückgütern in einem vergleichsweise großen Abstand vom Boden, so dass der Transportanhänger auch hoch aufgetürmte Stückgüter sicher transportieren und damit effektiv genutzt werden kann. Dadurch, dass die Sicherheitseinrichtung lösbar am Transportanhänger befestigt ist, kann diese vom Transportanhänger getrennt werden, sobald die Sicherungseinheit nicht mehr benötigt wird und/oder gegen eine andere Sicherungseinheit ausgetauscht werden soll. Die Sicherungseinheit ist dabei so ausgestaltet, dass die erste Sicherungswand und die zweite Sicherungswand auf den Boden, einer Aufnahmeeinrichtung oder einer anderen Auflage abgelegt werden können, so dass die Sicherungseinheit schnell und ohne großen Kraftaufwand vom Befestigungsabschnitt des Transportanhängers gelöst werden kann. Da die Sicherungseinheit vom Transportanhänger entfernt und durhc eine andere Sicherungseinheit ersetzt werden kann, lässt sich der vorschlagsgemäße Transportanhänger auch zum Transport von deutlich anders geformten Gegenständen einsetzen. Infolgedessen lässt sich der vorschlagsgemäße Transportanhänger deutlich flexibler als bekannte Transportanhänger einsetzen, wodurch dieser wirtschaftlicher betrieben werden kann.

Bei einer weiteren Ausbildung ist vorgesehen, dass die Sicherungseinheit Rungen, Streben, oder Bordwände umfasst, welche lösbar am zumindest einen Befestigungsabschnitt befestigbar sind. Mit Rungen oder Streben können beispielsweise Baumstämme auf dem Transportanhänger gesichert werden. Mit Bordwänden lassen sich kugelförmige Stückgüter wie Getreide oder Mais transportieren. Da sich diese auch an den bereits vorhandenen Befestigungsabschnitten befestigen lassen, sind keine weiteren Maßnahmen notwendig, die Rungen, Streben oder Bordwände mit dem Transportanhänger zu verwenden. Folglich kann der Transportanhänger auch für den Transport von sich deutlich von Heu- oder Strohballen unterscheidenden land- oder forstwirtschaftlichen Stückgütern verwendet werden.

Eine fortentwickelte Ausbildung gibt vor, dass zumindest eine Laderampe zum Beladen der Ladefläche am zumindest einen Befestigungsabschnitt lösbar befestigbar ist. Die Laderampe ist insbesondere dann von Nutzen, wenn Fahrzeuge, Maschinen oder dergleichen mit dem Transportanhänger transportiert werden sollen. Auch hier gilt, dass die Laderampe ebenfalls am bereits ohnehin vorhandenen Befestigungsabschnitt befestigt werden kann, so dass keine zusätzlichen Maßnahmen notwendig sind, um die Laderampe mit dem Transportanhänger zu verwenden.

Nach Maßgabe einer fortentwickelten Ausbildung ist zumindest eine Abstützeinheit zum Abstützen des Transportanhängers beim Be- und Entladen am zumindest einen Befestigungsabschnitt lösbar befestigbar. Insbesondere beim Be- und Entladen des Transportanhängers mittels einer Laderampe kann es notwendig sein, den Transportanhänger abzustützen, um ein unkontrolliertes Kippen zu vermeiden. Auch zum Befestigen der Abstützeinheit kann der Befestigungsabschnitt verwendet werden, so dass auch hier keine weiteren diesbezüglichen Maßnahmen notwendig sind.

Beispielhafte Ausführungsformen der Erfindung werden im Folgenden unter Bezugnahme auf die beigefügten Zeichnungen näher erläutert. Es zeigen
- Figuren 1A und 1B: eine Aufnahmeeinrichtung eines Systems zum Aufnehmen, Wechseln und Lagern von Sicherungseinheiten zum Sichern von auf einem Transportanhänger gelagerten Gegenständen,
- Figuren 2 bis 4B: ein erstes Ausführungsbeispiel eines Systems zum Aufnehmen, Wechseln und Lagern von Sicherungseinheiten zum Sichern von auf einem Transportanhänger gelagerten Gegenständen in verschiedenen Betriebszuständen,
- Figuren 5 bis 7: den Transportanhänger ohne die abgelegte Sicherungseinheit und mit anderen Sicherungseinheiten, und
- Figur 8: ein zweites Ausführungsbeispiel eines Systems zum Aufnehmen, Wechseln und Lagern von Sicherungseinheiten zum Sichern von auf einem Transportanhänger gelagerten Gegenständen.

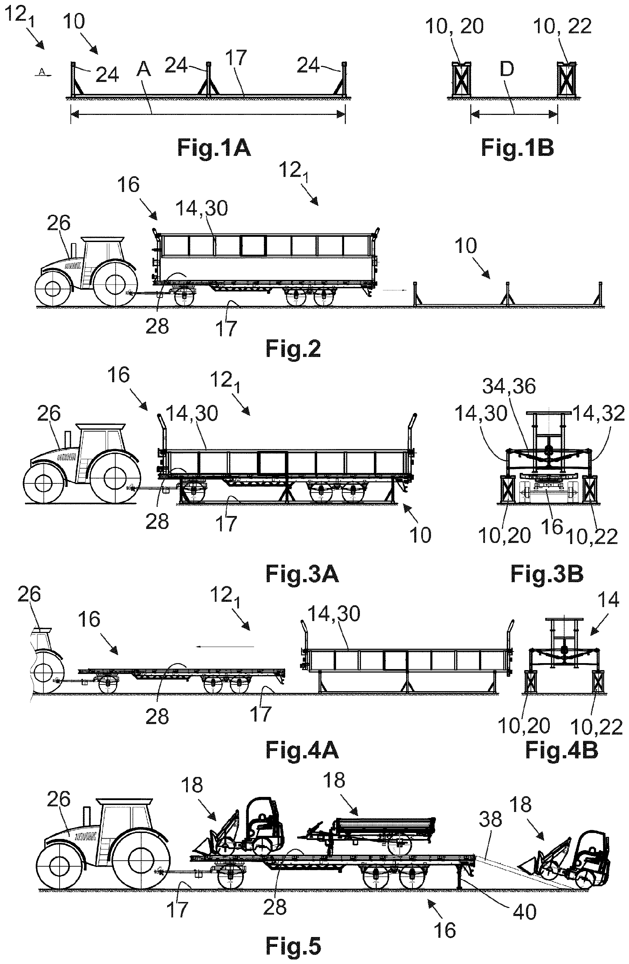

In Figur 1A ist eine Aufnahmeeinrichtung 10 eines ersten Ausführungsbeispiels eines Systems 12₁ zum Aufnehmen, Wechseln und Lagern von Sicherungseinheiten 14 zum Sichern von auf einem Transportanhänger 16 gelagerten Gegenständen 18 anhand einer Seitenansicht und in Figur 1B anhand einer Hinteransicht gezeigt. Die Aufnahmeeinrichtung 10 ist auf einem Boden 17, beispielsweise einer Halle, angeordnet und weist einen ersten Aufnahmeabschnitt 20 und einen zweiten Aufnahmeabschnitt 22 auf, die im dargestellten Ausführungsbeispiel jeweils drei Stützen 24 umfassen, die äquidistant angeordnet sind. Der erste Aufnahmeabschnitt 20 und der zweite Aufnahmeabschnitt 22 sind identisch aufgebaut. Der erste Aufnahmeabschnitt 20 und der zweite Aufnahmeabschnitt 22 sind parallel und fluchtend zueinander in einer Distanz D zueinander angeordnet, der so bemessen ist, dass ein Transportanhänger 16 (siehe beispielsweise Figuren 2 und 3) zwischen dem ersten Aufnahmeabschnitt 20 und dem zweiten Aufnahmeabschnitt 22 längsseits angeordnet werden kann. Der Transportanhänger 16 und die Aufnahmeeinrichtung 10 sind Teil des bereits erwähnten Systems 12₁ zum Aufnehmen, Wechseln und Lagern von Sicherungseinheiten 14 zum Sichern von auf dem Transportanhänger 16 gelagerten Gegenständen 18.

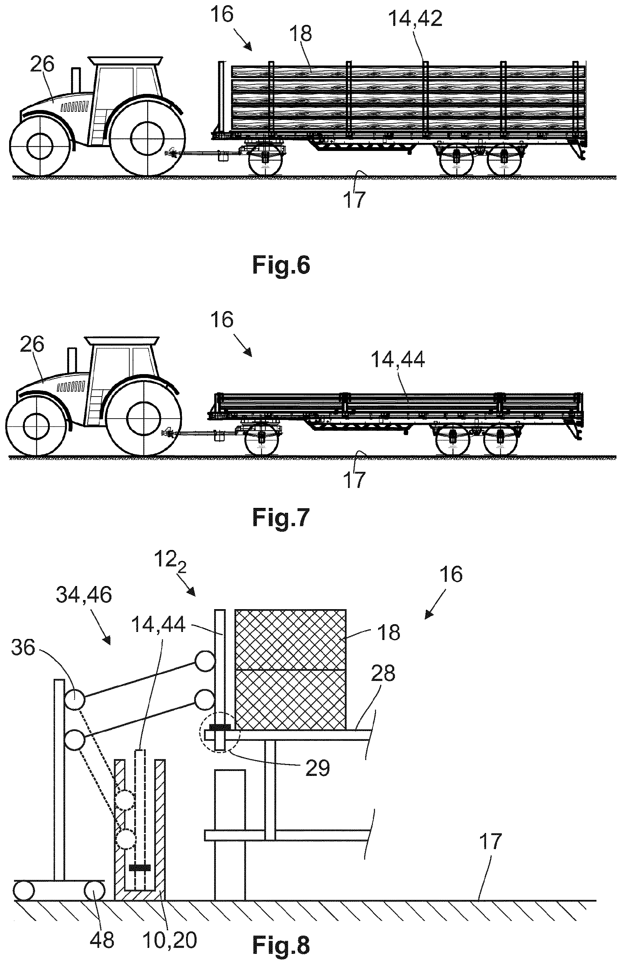

Der Transportanhänger 16, der beispielsweise mit einem Traktor 26 bewegt werden kann, weist eine Ladefläche 28 auf, auf welcher Gegenstände 18 wie Fahrzeuge (siehe Figur 5) oder land- oder forstwirtschaftliche Stückgüter wie Heu- oder Strohballen (siehe Figur 8) abgestellt oder abgelegt werden können. Zum Sichern der auf der Ladefläche 28 abgelegten Gegenstände 18 weist der Transportanhänger 16 eine Sicherungseinheit 14 auf, die lösbar an einer Anzahl von Befestigungsabschnitten 29 (siehe Figur 8) mit dem Transportanhänger 16 verbindbar ist. Die in den Figuren 2bis 4B dargestellte Sicherungseinheit 14 weist eine erste Sicherungswand 30 und eine zweite Sicherungswand 32 auf, welche mit einer Bewegungseinrichtung 34 (Figur 3B) zwischen einer bodennahen Beladungsstellung (nicht dargestellt) und einer Schließstellung (Figur 2) bewegbar ist. Hierzu weist die Bewegungseinrichtung 34 eine Antriebseinrichtung 36 auf, die beispielsweise hydraulisch oder elektrisch betrieben werden kann. Die Bewegungseinrichtung 34 in die Antriebseinrichtung 36 sind in diesem Ausführungsbeispiel Teil der Sicherungseinheit 14.

Wie aus den Figuren 2, 3A und 3B hervorgeht, wird der Transportanhänger 16 zwischen den ersten Aufnahmeabschnitt 20 und den zweiten Aufnahmeabschnitt 22 gefahren, wobei sich die erste Sicherungswand 30 und die zweite Sicherungswand 32 in der Schließstellung befinden (Figur 2). Der Abstand A der beiden endständigen Stützen 24 der Aufnahmeabschnitte 20, 22 (siehe Figur 1A) ist etwas geringer als die Länge der Sicherungswände 30, 32. Der Transportanhänger 16 wird so zwischen dem ersten Aufnahmeabschnitt 20 und dem zweiten Aufnahmeabschnitt 22 positioniert, dass die erste Sicherungswand 30 und die zweite Sicherungswand 32 den ersten Aufnahmeabschnitt 20 bzw. den zweiten Aufnahmeabschnitt 22 an beiden Enden überragen. Anschließend werden die erste Sicherungswand 30 und die zweite Sicherungswand 32 mit der Bewegungseinrichtung 34 aus der Schließstellung in eine Lagerstellung bewegt, in welcher die erste Sicherungswand 30 und die zweite Sicherungswand 32 auf dem ersten Aufnahmeabschnitt 20 bzw. dem zweiten Aufnahmeabschnitt 22 aufliegen (Figuren 3A und 3B). Je nach Ausgestaltung des Befestigungsabschnitts 29 ist die Lagerstellung so gewählt, dass die Sicherungseinheit 14 etwas vom Transportanhänger 16 abgehoben und folglich der Transportanhänger 16 mehr oder weniger stark entlastet wird. Jedenfalls ist die Sicherungseinheit 14 in der Lagerstellung vom Transportanhänger 16 lösbar, so dass, wie in Figur 4 gezeigt, der Transportanhänger 16 von der Sicherungseinheit 14 verwendet werden kann, während die Sicherungseinheit 14 auf der Aufnahmeeinrichtung 10 abgestellt ist. Solange die Sicherungseinheit 14 auf der Aufnahmeeinrichtung 10 abgestellt ist, verbleibt die Sicherungseinheit 14 in der Lagerstellung. Dies kann beispielsweise dadurch geschehen, dass die Bewegungseinrichtung 34 gesperrt wird und sich dann nicht bewegen kann.

Wie aus den Figuren 5 bis 7 ersichtlich, kann der Transportanhänger 16 nun für andere Zwecke als zum Transport von Heu- oder Strohballen verwendet werden. Beispielsweise können Gegenstände 18 wie kleine Bagger, kleine Anhänger oder dergleichen auf der Ladefläche 28 des Transportanhängers 16 abgestellt und transportiert werden (Figur 5). Um die Gegenstände 18 auf die Ladefläche 28 fahren zu können, ist eine Laderampe 38 vorgesehen, die an einem oder an mehreren der Befestigungsabschnitte 29 befestigt werden kann, die auch für die Befestigung der Sicherungseinheit 14 verwendet wird. Um ein Kippen des Transportanhängers 16 beim Beladen der Ladefläche 28 zu verhindern, wird eine Abstützeinheit 40 mit dem Transportanhänger 16 verbunden, wozu ebenfalls einer oder mehrere der Befestigungsabschnitte 29 des Transportanhängers 16 verwendet werden können, an denen auch die Sicherungseinheit 14 mit dem Transportanhänger 16 verbunden wird. Die Befestigungsabschnitte 29 für die Sicherungseinheit 14 können auch für Sicherungsseile oder Sicherungsgurte (nicht dargestellt) verwendet werden, mit denen die Gegenstände 18 auf der Ladefläche 28 gesichert werden können.

In den Figuren 6 und 7 sind weitere Anwendungsbeispiele gezeigt, für welche der Transportanhänger 16 verwendet werden kann, wenn die Sicherungseinheit 14 auf der Aufnahmeeinrichtung 10 abgelegt ist. In Figur 6 sind Rungen oder Streben 42 an den Befestigungsabschnitten 29 des Transportanhängers 16 befestigt, an denen die auf der Aufnahmeeinrichtung 10 abgelegte Sicherungseinheit 14 mit dem Transportanhänger 16 verbindbar ist. Mit den Rungen oder Streben 42 können Baumstämme oder ähnlich geformte Gegenstände 18 wie Rohre oder Stangen transportiert werden. In Figur 7 sind Bordwände 44 an den Befestigungsabschnitten 29 des Transportanhängers 16 befestigt, an denen die auf der Aufnahmeeinrichtung 10 abgelegte Sicherungseinheit 14 mit dem Transportanhänger 16 verbindbar ist. Die Verwendung von Bordwänden 44 eignet sich beispielsweise dann, wenn kugelförmige und/oder rieselfähige Gegenstände 18 wie Getreidekörner mit dem Transportanhänger 16 transportiert werden sollen. Es müssen keine zusätzlichen Befestigungsabschnitte 29 vorgesehen werden, vielmehr können die vorhandenen Befestigungsabschnitte 29 für

Wie erwähnt, dienen die Rungen, Streben 42 und Bordwände 44 ebenfalls der Sicherung der auf der Ladefläche 28 aufgenommenen Gegenstände 18, so dass sie ebenfalls zu der Sicherungseinheit 14 gezählt oder als eine eigene Sicherungseinheit 14 aufgefasst werden können. Insofern dient das hier vorgestellte System 12₁ auch zum Wechseln von kompletten Sicherungseinheiten 14. Es müssen keine zusätzlichen Befestigungsabschnitte 29 vorgesehen werden, vielmehr können die vorhandenen Befestigungsabschnitte 29 für verschiedene Komponenten der Sicherungseinheit 14 oder für verschiedene Sicherungseinheiten 14 verwendet werden.

In Figur 8 ist ein zweites Ausführungsbeispiel des Systems 12₂ zum Aufnehmen, Wechseln und Lagern von Sicherungseinheiten 14 anhand einer prinzipiellen Darstellung gezeigt. In diesem Ausführungsbeispiel sind die Bewegungseinrichtung 34 und die Antriebseinrichtung 36 außerhalb der Sicherungseinheit 14 angeordnet. Die Sicherungseinheit 14 umfasst in diesem Fall eine Bordwand 44, die mit der Bewegungseinrichtung 34 zwischen dem Transportanhänger 16 und der Aufnahmeeinrichtung 10 bewegt werden kann. Die Bewegungseinrichtung 34 weist eine Parallelogrammführung 46 auf, die auf Rollen 48 gelagert ist. Insofern lässt sich die Bordwand 44 vom Benutzer auf einfache und sichere Weise zwischen dem Transportanhänger 16 und der Aufnahmeeinrichtung 10 bewegen, wobei die Bordwand auf einer definierten Bahn geführt wird. Eine Antriebseinrichtung 36 ist nicht zwingend erforderlich, vielmehr kann die Parallelogrammführung 46 mit hier nicht dargestellten Federn oder dergleichen zusammenwirken, die ähnlich wie bei einem Garagenschwingtor dem Benutzer beim Verstellen von einer in die andere Stellung unterstützen, so dass der erforderliche Kraftaufwand gering gehalten wird.

Wie ebenfalls aus der Figur 8 ersichtlich, kann gemäß dem zweiten Ausführungsbeispiel des Systems 12₂ die Bordwand 44 der Sicherungseinheit 14 in die Aufnahmeabschnitte 20, 22 eingebracht werden. Hierzu ist der Aufnahmeabschnitt 20 nach Art einer Halterung ausgeführt. Die Bordwand 44 wird daher nicht, wie im ersten Ausführungsbeispiel des Systems 12₁, auf der Aufnahmeeinrichtung 10 abgelegt. Die Aufnahmeabschnitte 20, 22 können auch für Lagerung der Rungen und Streben 42 verwendet werden, so dass alle oder zumindest nahezu alle Komponenten der Sicherungseinheit 14 in der Aufnahmeeinrichtung 10 gelagert werden können.

### Bezugszeichenliste

- 10: Aufnahmeeinrichtung
- 12: System
- 12₁, 12₂: System
- 14: Sicherungseinheit
- 16: Transportanhänger
- 17: Boden
- 18: Gegenstand
- 20: erster Aufnahmeabschnitt
- 22: zweiter Aufnahmeabschnitt
- 24: Stütze
- 26: Traktor
- 28: Ladefläche
- 29: Befestigungsabschnitt
- 30: erste Sicherungswand
- 32: zweite Sicherungswand
- 34: Bewegungseinrichtung
- 36: Antriebseinrichtung
- 38: Laderampe
- 40: Abstützeinheit
- 42: Rungen, Streben
- 44: Bordwand
- 46: Parallelogrammführung
- 48: Rollen

- A: Abstand
- D: Distanz

## Patentansprüche

1. System (12) zum Aufnehmen, Wechseln und Lagern von Sicherungseinheiten (14) zum Sichern von auf einem Transportanhänger (16) gelagerten Gegenständen (18) wie Fahrzeugen oder land- oder forstwirtschaftlichen Stückgütern, umfassend
- einen Transportanhänger (16) zum Transportieren von Gegenständen (18) wie Fahrzeugen oder land- oder forstwirtschaftlichen Stückgütern, mit
o einer Ladefläche (28) zum Aufnehmen der Gegenstände (18),
o zumindest einer Sicherungseinheit (14) zum Sichern der auf der Ladefläche (28) aufgenommenen Gegenstände (18), und
o zumindest einem Befestigungsabschnitt (29), mit welchem die Sicherungseinheit (14) lösbar mit dem Transportanhänger (16) verbindbar ist,
**dadurch gekennzeichnet, dass** das System
- eine Aufnahmeeinrichtung (10) zum Aufnehmen, Wechseln und Lagern der zumindest einen vom Transportanhänger (16) gelösten Sicherungseinheit (14, und zumindest eine Bewegungseinrichtung (34) mit einer Antriebseinrichtung (36) zum Bewegen der Sicherungseinheit (14) zwischen dem Transportanhänger (16) und der Aufnahmeeinrichtung (10) umfasst, wobei die Bewegungseinrichtung (34) eine Parallelogrammführung (46) aufweist, die auf Rollen (48) gelagert ist.

2. System (12) nach Anspruch 1,
**dadurch gekennzeichnet, dass** die Aufnahmeeinrichtung (10) einen ersten Aufnahmeabschnitt (20) und einen zweiten Aufnahmeabschnitt (22) umfasst, die derart angeordnet sind, dass der Transportanhänger (16) zwischen dem ersten Aufnahmeabschnitt (20) und dem zweiten Aufnahmeabschnitt (22) positionierbar ist.

3. System (12) nach einem der vorherigen Ansprüche,
**dadurch gekennzeichnet, dass** die Bewegungseinrichtung (34) an der Sicherungseinheit (14) angeordnet ist.

4. System (12) nach einem der vorherigen Ansprüche,
**dadurch gekennzeichnet, dass** die Sicherungseinheit (14) eine erste Sicherungswand (30) und eine zweite Sicherungswand (32) umfasst, die mit der Bewegungseinrichtung (34) in eine Lagerstellung bewegbar sind, in welcher die erste Sicherungswand (30) auf dem ersten Aufnahmeabschnitt (20) und die zweite Sicherungswand (32) auf dem zweiten Aufnahmeabschnitt (22) derart aufliegen, dass die Sicherungseinheit (14) vom Transportanhänger (16) lösbar ist.

5. System (12) nach Anspruch 4,
**dadurch gekennzeichnet, dass** die erste Sicherungswand (30) und die zweite Sicherungswand (32) zwischen einer bodennahen Beladungsstellung, in welcher der Transportanhänger (16) beladen werden kann, und einer Schließstellung mittels der Bewegungseinrichtung (34) verschwenkbar sind, in welcher die erste Sicherungswand (30) und die zweite Sicherungswand (32) die auf der Ladefläche (28) aufgenommenen Gegenstände (18) sichern.

6. System (12) nach einem der vorherigen Ansprüche,
**dadurch gekennzeichnet, dass** die Sicherungseinheit (14) Rungen, Streben (42) oder Bordwände (44) umfasst, welche lösbar am zumindest einen Befestigungsabschnitt (29) befestigbar sind.

7. System (12) nach einem der vorherigen Ansprüche,
**dadurch gekennzeichnet, dass** zumindest eine Laderampe (38) zum Beladen der Ladefläche (28) am zumindest einen Befestigungsabschnitt (29) lösbar befestigbar ist.

8. System (12) nach einem der vorherigen Ansprüche,
**dadurch gekennzeichnet, dass** zumindest eine Abstützeinheit (40) zum Abstützen des Transportanhängers (16) beim Be- und Entladen am zumindest einen Befestigungsabschnitt (29) lösbar befestigbar ist.

9. Transportanhänger (16) zum Transportieren von Gegenständen (18) wie Fahrzeugen oder land- oder forstwirtschaftlichen Stückgütern, umfassend
- eine Ladefläche (28) zum Aufnehmen der Gegenstände (18),
- zumindest eine Sicherungseinheit (14) zum Sichern der auf der Ladefläche (28) aufgenommenen Gegenstände (18), wobei die Sicherungseinheit (14) eine erste Sicherungswand (30) und eine zweite Sicherungswand (32) aufweist, die
o zwischen einer bodennahen Beladungsstellung, in welcher der Transportanhänger (16) beladen werden kann, und
o einer Schließstellung verschwenkbar sind, in welcher die erste Sicherungswand (30) und die zweite Sicherungswand (32) die auf der Ladefläche (28) aufgenommenen Gegenstände (18) sichern,
- eine Bewegungseinrichtung (34) mit einer Antriebseinrichtung (36) zum Verschwenken der ersten Sicherungswand (30) und der zweiten Sicherungswand (32),
**dadurch gekennzeichnet, dass** der Anhänger
- zumindest einen Befestigungsabschnitt (29), mit welchem die Sicherungseinheit (14) lösbar mit dem Transportanhänger (16) verbindbar ist, umfasst, und
- die erste Sicherungswand (30) und die zweite Sicherungswand (32) mit der Bewegungseinrichtung (34) in eine Lagerstellung bewegbar sind, in welcher die erste Sicherungswand (30) und die zweite Sicherungswand (32) derart auf dem Boden (17) oder einer Aufnahmeeinrichtung (10) aufliegen, dass die Sicherungseinheit (14) vom Transportanhänger (16) lösbar ist.

10. Transportanhänger (16) nach Anspruch 9,
**dadurch gekennzeichnet, dass** die Sicherungseinheit (14) Rungen, Streben (42), oder Bordwände (44) umfasst, welche lösbar am zumindest einen Befestigungsabschnitt (29) befestigbar sind.

11. Transportanhänger (16) nach einem der Ansprüche 9 oder 10, **dadurch gekennzeichnet, dass** zumindest eine Laderampe (38) zum Beladen der Ladefläche (28) am zumindest einen Befestigungsabschnitt (29) lösbar befestigbar ist.

12. Transportanhänger (16) nach einem der Ansprüche 9 bis 11, **dadurch gekennzeichnet, dass** zumindest eine Abstützeinheit (40) zum Abstützen des Transportanhängers (16) beim Be- und Entladen am zumindest einen Befestigungsabschnitt (29) lösbar befestigbar ist.

## Claims

1. System (12) for taking on, changing and storing securing units (14) for securing objects (18) stored on a transport trailer (16) such as motor vehicles or agricultural or forestry bulk cargo, comprising
- a transport trailer (16) for transporting objects (18) such as motor vehicles or agricultural or forestry bulk cargo, having
o a loading platform (28) for taking on the objects (18),
o at least one securing unit (14) for securing the objects (18) taken on the loading platform (28), and
o at least one securing section (29), by means of which the securing unit (14) is rendered detachably connectable to the transport trailer (16),
**characterized in that** the system comprises a take-on device (10) for taking on, changing and storing the at least one securing unit (14) detached from the transport trailer, as well as at least one movement device (34) having a drive mechanism (36) for moving the securing unit (14) between the transport trailer (16) and the take-on device (10), wherein the movement device (34) comprises a parallelogram guide (46) which is mounted on rollers (48).

2. System (12) in accordance with claim 1,
**characterized in that** the take-on device (10) comprises a first take-on section (20) and a second take-on section (22), which are arranged such that the transport trailer (16) is rendered positionable between the first take-on section (20) and the second take-on section (22).

3. System (12) in accordance with any of the preceding claims,
**characterized in that** the movement device (34) is arranged on the securing unit (14).

4. System (12) in accordance with any of the preceding claims,
**characterized in that** the securing unit (14) comprises a first securing wall (30) and a second securing wall (32), which are moveable, by means of the movement device (34), into a storage position, in which the first securing wall (30) rests on the first take-on section (20) and the second securing wall (32) rests on the second securing section (22) such that the securing unit (14) is rendered detachable from the transport trailer (16).

5. System (12) in accordance with claim 4,
**characterized in that** the first securing wall (30) and the second securing wall (32) are pivotable, by means of the movement device (34), between a near-ground loading position, in which the transport trailer (16) can be loaded, and a locking position, in which the first securing wall (30) and the second securing wall (32) secure the objects (18) taken on the loading platform (28).

6. System (12) in accordance with any of the preceding claims,
**characterized in that** the securing unit (14) comprises stanchions, struts (42) or sideboards (44), which are detachably attached to at least one securing section (29).

7. System (12) in accordance with any of the preceding claims,
**characterized in that** at least one loading ramp (38) is detachable attachable to at least one securing section (29) for loading the loading platform (28).

8. System (12) in accordance with any of the preceding claims,
**characterized in that** at least one support unit (40) is detachably attachable to at least one securing section (29) for supporting the transport trailer (16) during loading and unloading.

9. Transport trailer (16) for transporting objects (18) such as motor vehicles or agricultural or forestry bulk cargo, comprising
- a loading platform (28) for taking on the objects (18),
- at least one securing unit (14) for securing the objects taken on the loading platform (28), wherein the securing unit (14) comprises a first securing wall (30) and a second securing wall (32), which
o are pivotable between a near-ground loading position, in which the transport trailer (16) can be loaded, and
o a locking position, in which the first securing wall (30) and the second securing wall (32) secure the objects (18) taken on the loading platform (28),
- a movement device (34) with a drive mechanism (36) for pivoting the first securing wall (30) and the second securing wall (32),
**characterized in that** the trailer
- comprises at least one securing section (29), by means of which the securing unit (14) is rendered detachably connectible to the transport trailer (10), and
- **in that** the first securing wall (30) and the second securing wall (32) are moveable, by means of the movement device (34) into a storage position, in which the first securing wall (30) and the second securing wall (32) rest on the ground (17) or on a take-on device (10) such that the securing unit (14) is detachable from the transport trailer (16).

10. Transport trailer (16) in accordance with claim 9,
**characterized in that** the securing unit (14) comprises stanchions, struts (42) or sideboards (44) which are detachably attachable to at least one securing section (29).

11. Transport trailer (16) in accordance with claim 9 or 10,
**characterized in that** at least one loading ramp (38) is detachably attachable to at least one securing section (29) for loading the loading platform (28).

12. Transport trailer (16) in accordance with any of claims 9 to 11,
**characterized in that** at least one support unit (40) is detachably attachable to at least one securing section (29) for supporting the transport trailer (16) during loading and unloading.

## Revendications

1. Système (12) pour recevoir, changer et ranger des unités de maintien (14) pour maintenir des objets (18) placés sur une remorque de transport (16), tels que des véhicules ou des produits d'exploitation agricole ou forestière, comprenant :
- une remorque (16) pour transporter des objets (18) tels que des véhicules ou des produits d'exploitations agricoles ou d'exploitations forestières comprenant :
* une surface de chargement (28) pour recevoir les objets (18),
* au moins une unité de maintien (14) pour maintenir les objets (18) placés sur la surface de chargement (28), et
* au moins un segment de fixation (29) qui relie de manière amovible l'unité de maintien (14) à la remorque (16),
système **caractérisé par**
- une installation de réception (10) pour recevoir, changer ou ranger au moins une unité de maintien (14) détachée de la remorque (16), et
au moins une installation de manoeuvre (34) avec une installation d'entraînement (36) pour déplacer l'unité de maintien (14) entre la remorque (16) et l'installation de réception (10),
* l'installation de manoeuvre (34) ayant un parallélogramme déformable (46) monté sur des galets (48).

2. Système (12) selon la revendication 1,
**caractérisé en ce que**
l'installation de réception (10) comprend un premier segment de réception (20) et un second segment de réception (22) qui sont disposés de façon que la remorque (16) puisse se placer entre le premier segment de réception (20) et le second segment de réception (22).

3. Système (12) selon l'une des revendications précédentes,
**caractérisé en ce que**
l'installation de manoeuvre (34) est sur l'unité de maintien (14).

4. Système (12) selon l'une des revendications précédentes,
**caractérisé en ce que**
l'unité de maintien (14) comporte une première paroi de maintien (30) et une seconde paroi de maintien (32) qui sont mobiles avec l'installation de manoeuvre (34) dans une position de rangement dans laquelle la première paroi de maintien (30) s'applique sur le premier segment de maintien (20) et la seconde paroi de maintien (32) s'applique sur le second segment de maintien (22) de façon que l'unité de maintien (14) puisse se détacher de la remorque (16).

5. Système (12) selon la revendication 4,
**caractérisé en ce que**
la première paroi de maintien (30) et la seconde paroi de maintien (32) basculent entre une position de chargement proche du sol dans laquelle on charge la remorque (16) et une position de fermeture par l'installation de manoeuvre (34) dans laquelle la première paroi de maintien (30) et la seconde paroi de maintien (32) maintiennent les objets (18) sur la surface de chargement (28).

6. Système (12) selon l'une des revendications précédentes,
**caractérisé en ce que**
l'unité de maintien (14) comprend des brides, des entretoises (42) ou des ridelles (44) qui se fixent de manière détachable à au moins un segment de fixation (29).

7. Système (12) selon l'une des revendications précédentes,
**caractérisé par**
au moins une rampe de chargement (38) pour charger la surface de chargement (28) qui se fixe de manière amovible à au moins un segment de fixation (29).

8. Système (12) selon l'une des revendications précédentes,
**caractérisé en ce que**
au moins une unité d'appui (40) pour soutenir la remorque (16) au chargement et déchargement qui se fixe de manière amovible à au moins un segment de fixation (29).

9. Remorque (16) pour transporter des objets (18) tels que des véhicules ou des produits d'exploitations agricoles ou forestières comprenant :
- une surface de chargement (28) pour recevoir les objets (18),
- au moins une unité de maintien (14) pour tenir les objets (18) placés sur la surface de chargement (28),
l'unité de maintien (14) ayant une première paroi de maintien (30) et une seconde paroi de maintien (32), avec
* une position de chargement proche du sol, pour charger la remorque (16),
* et qui peuvent se basculer en position de fermeture dans laquelle la première paroi de maintien (30) et la seconde paroi de maintien (32) tiennent les objets (18) placés sur la surface de chargement (28),
- une installation de manoeuvre (34) avec une installation d'entraînement (36) pour basculer la première paroi de maintien (30) et la seconde paroi de maintien (32),
remorque **caractérisée en ce qu'**elle comprend :
- au moins un segment de fixation (29) pour relier l'unité de maintien (14) de manière amovible à la remorque (16), et
- la première paroi de maintien (30) et la seconde paroi de maintien (32) peuvent être mises dans une position de rangement avec une installation de manoeuvre (34),
position dans laquelle
la première paroi de maintien (30) et la seconde paroi de maintien (32) reposent sur le sol (17) ou sur une installation de réception (10) de façon que l'unité de maintien (14) puisse se détacher de la remorque (16).

10. Remorque (16) selon la revendication 9,
**caractérisée en ce que**
l'unité de maintien (14) comprend des véhicules, des entretoises (42) ou des ridelles (44) qui se fixent de manière amovible à au moins un segment de fixation (29).

11. Remorque (16) selon les revendications 9 ou 10,
**caractérisée par**
au moins une rampe de chargement (38) pour charger la surface de chargement (28) qui se fixe de manière amovible à au moins un segment de fixation (29).

12. Remorque (16) selon l'une des revendications 9 à 11,
**caractérisée par**
au moins une unité d'appui (40) pour soutenir la remorque (16) au chargement et au déchargement et qui se fixe de manière amovible à au moins un segment de fixation (29).
